(19)

**Europäisches Patentamt**

**European Patent Office**

**Office européen des brevets**

(11) **EP 4 586 052 A1**

(12) **EUROPEAN PATENT APPLICATION**
published in accordance with Art. 153(4) EPC

(43) Date of publication:
**16.07.2025 Bulletin 2025/29**

(21) Application number: **22958165.7**

(22) Date of filing: **09.09.2022**

(51) International Patent Classification (IPC):
***G06F 3/01*** (2006.01)

(52) Cooperative Patent Classification (CPC):
**G06F 3/01**

(86) International application number:
**PCT/JP2022/033877**

(87) International publication number:
**WO 2024/053087 (14.03.2024 Gazette 2024/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Sony Interactive Entertainment Inc.
Tokyo 108-0075 (JP)**

(72) Inventors:
• **MORI, Hideki
Tokyo 108-0075 (JP)**

• **MATSUGAMI, Hiroya
Tokyo 108-0075 (JP)**
• **NISHIDATE, Masaomi
Tokyo 108-0075 (JP)**
• **TAKAHASHI, Yoshihisa
Tokyo 108-0075 (JP)**
• **SHIONO, Koichi
Tokyo 108-0075 (JP)**
• **KANEKO, Hirofumi
Tokyo 108-0075 (JP)**

(74) Representative: **D Young & Co LLP
3 Noble Street
London EC2V 7BQ (GB)**

(54) **OPERATION DEVICE**

(57)  There is provided a manipulating device (10) that is capable of expressing force-like tactile senses. The manipulating device (10) includes a plurality of link shafts (SF), a plurality of node mechanisms (ND) that cooperate with the plurality of link shafts (SF) in providing a grid shape, the plurality of node mechanisms (ND) holding ends of at least two or more of the link shafts (SF) of the plurality of link shafts (SF) such that the at least two or more of the link shafts (SF) are variable in posture, and a vibrating structure for vibrating the manipulating device (10), depending on a state of at least either one of the plurality of node mechanisms (ND).

FIG.4

EP 4 586 052 A1

**Description**

[Technical Field]

The present invention relates to a manipulating device.

[Background Art]

PTL 1 referred to below discloses a manipulating device for use in manipulating a gaming apparatus. The manipulating device includes manipulating members such as manipulating buttons, direction keys, and a manipulating stick.

[Citation List]

[Patent Literature]

[PTL 1]
PCT Patent Publication No. WO2014/061362

[Summary]

[Technical Problems]

In recent years, gaming apparatuses and the like have become able to express a variety of motions of display objects along with increases in the processing capability of computers. In order to enable such display objects to move in response to manipulations made by a user, there have been demands for manipulating devices that have a high degree of freedom for manipulation. Further, it is preferable for manipulating devices with a high degree of freedom for manipulation to allow the user to have experiences with a feeling of presence based on perception of the user.
The present invention has been made in view of the above problems. It is an object of the present invention to provide a manipulating device that is capable of expressing force-like tactile senses.
In order to meet the above problems, a manipulating device according to the present disclosure refers to a manipulating device for outputting signals to a computer, depending on its posture changes caused by manipulations made by a user. The manipulating device includes a plurality of link shafts, a plurality of node mechanisms that cooperate with the plurality of link shafts in providing a grid shape, the plurality of node mechanisms holding ends of at least two or more of the link shafts of the plurality of link shafts such that the at least two or more of the link shafts are variable in posture, and a vibrating structure for vibrating the manipulating device, depending on a state of at least either one of the plurality of node mechanisms.

[Brief Description of Drawings]

[FIG. 1]

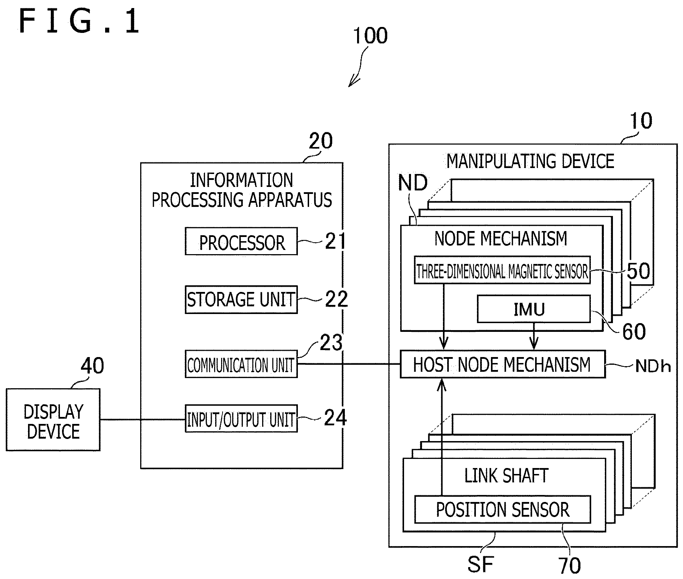

FIG. 1 is a diagram illustrating an example of a physical configuration of a display control system according to an embodiment of the present invention.
[FIG. 2]

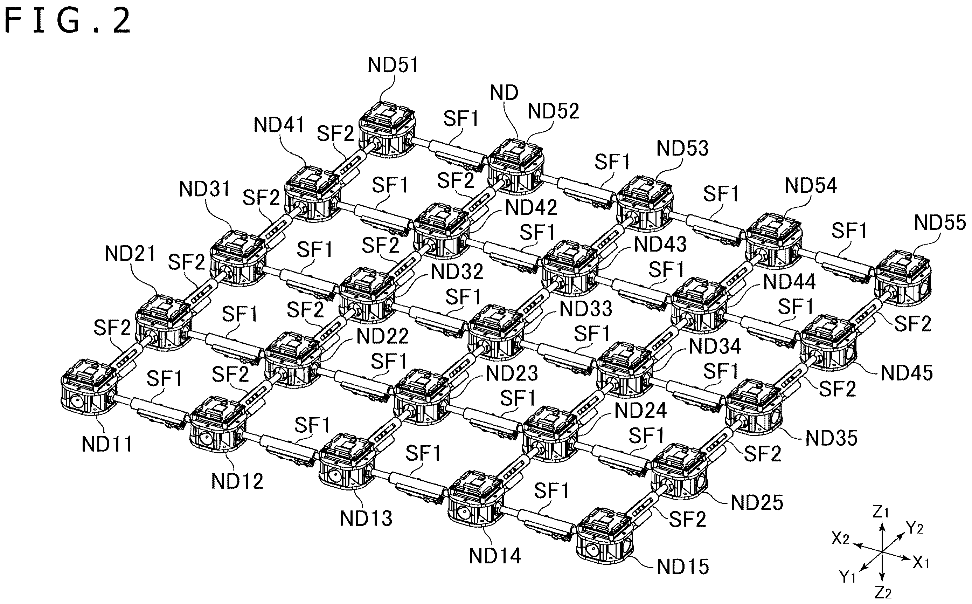

FIG. 2 is a perspective view illustrating a manipulating device according to the present embodiment.
[FIG. 3]

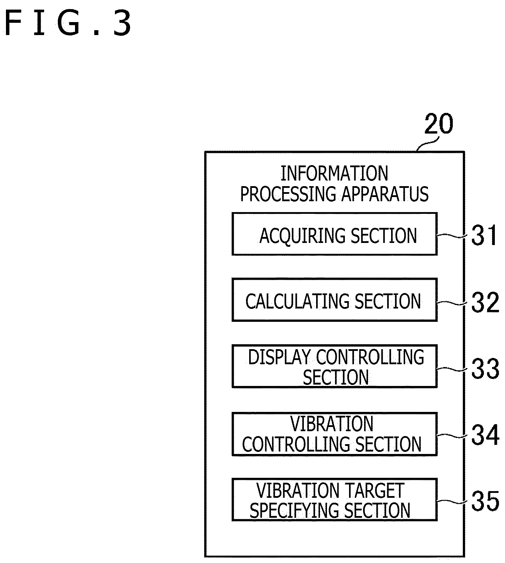

FIG. 3 is a functional block diagram illustrating an example of functions performed by an information processing apparatus according to the present embodiment.
[FIG. 4]

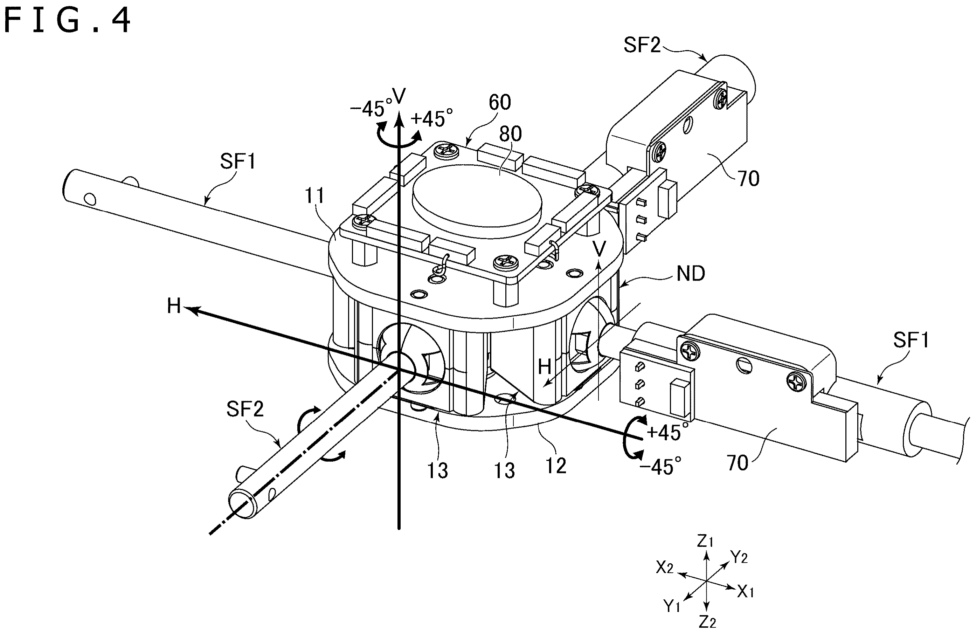

FIG. 4 is a perspective view illustrating a single node mechanism and four link shafts held by the node mechanism.
[FIG. 5]

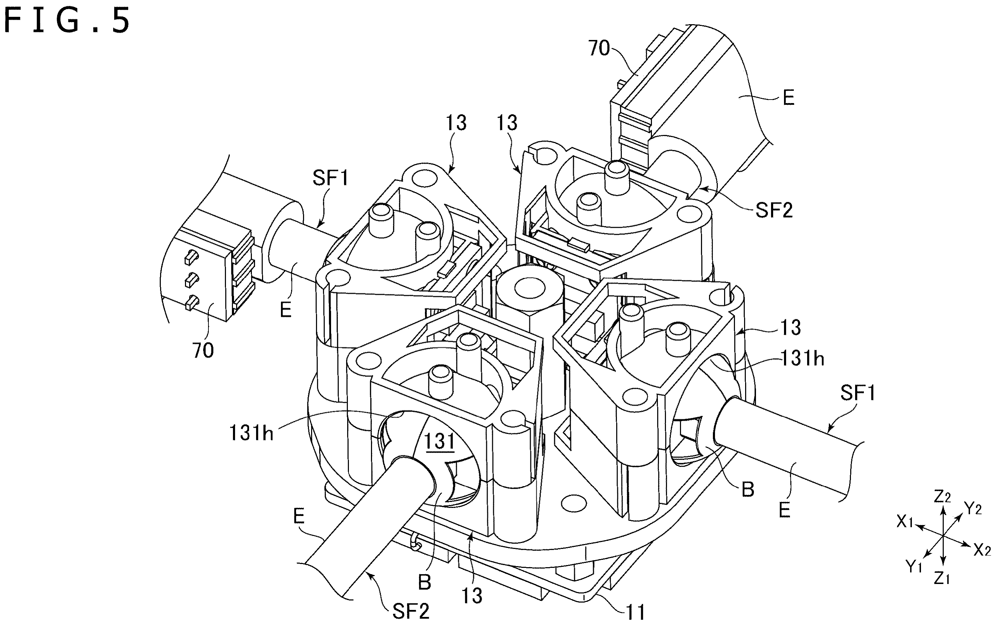

FIG. 5 is a perspective view illustrating the node mechanism with an outer covering removed therefrom.
[FIG. 6]

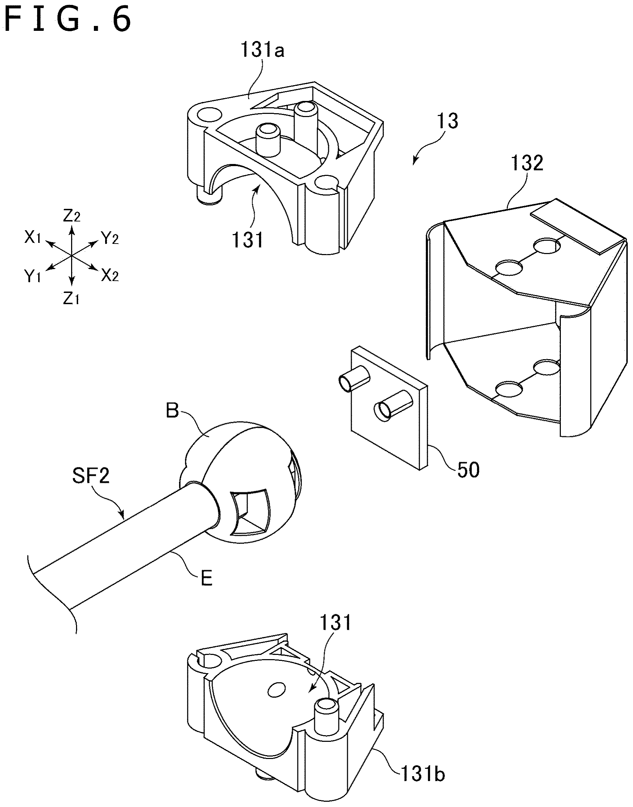

FIG. 6 is an exploded perspective view illustrating the node mechanism with a link shaft removed therefrom.
[FIG. 7]

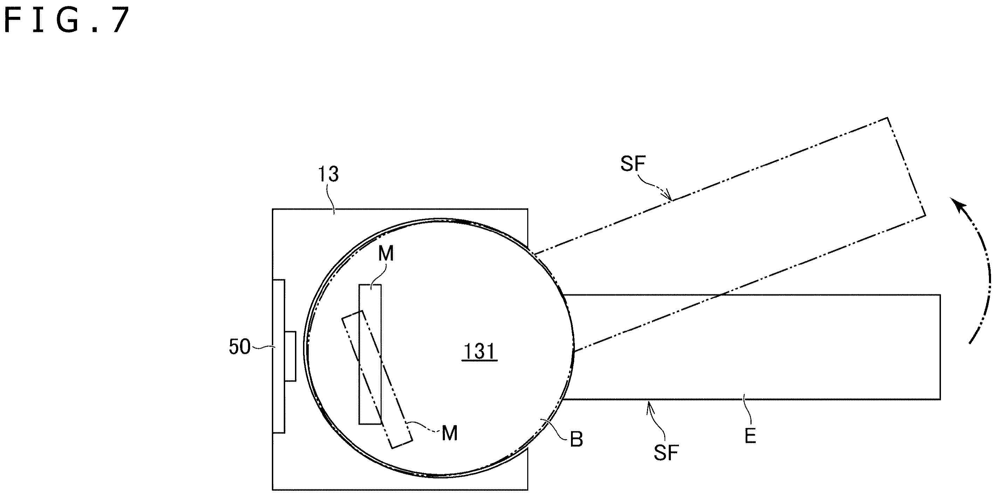

FIG. 7 is a cross-sectional view illustrating a manner in which a magnet disposed in facing relation to a three-dimensional magnetic sensor is displaced.
[FIG. 8]

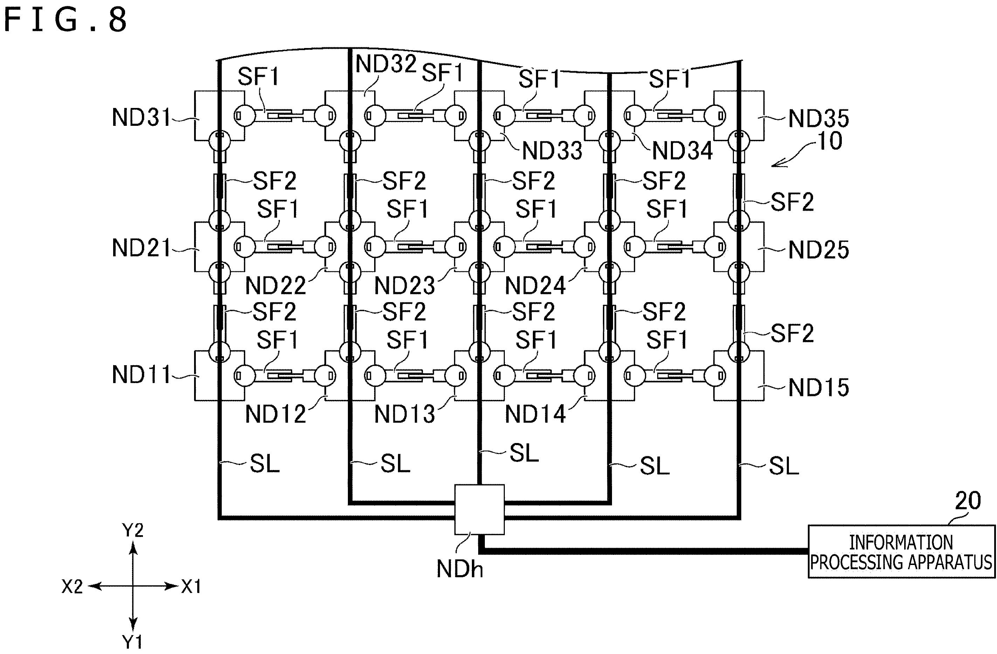

FIG. 8 is a view schematically illustrating a wiring arrangement of the display control system according to the present embodiment.
[FIG. 9]

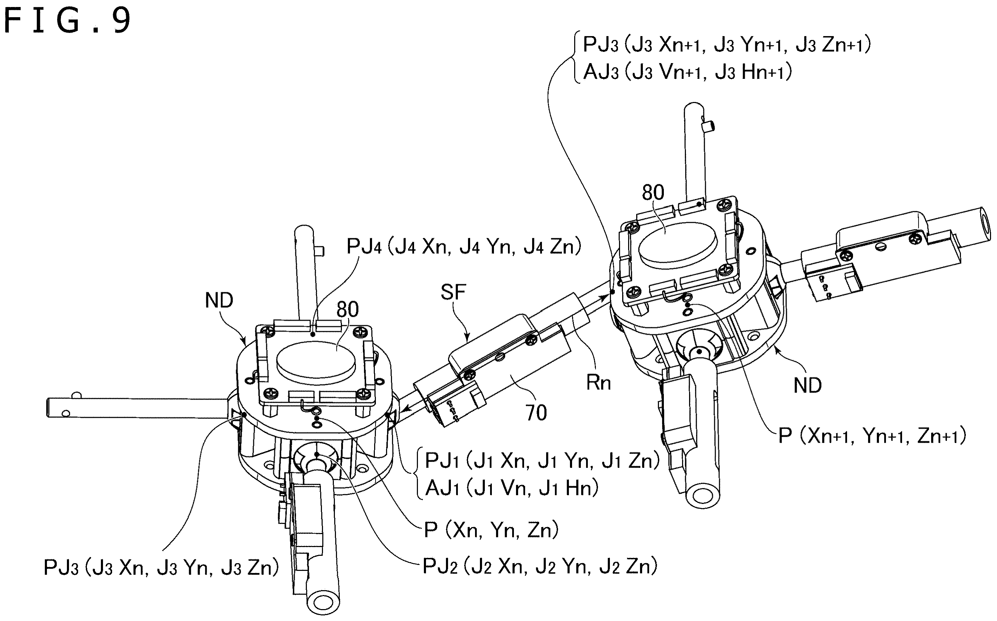

FIG. 9 is a view illustrating positional coordinates of various portions of node mechanisms.
[FIG. 10]

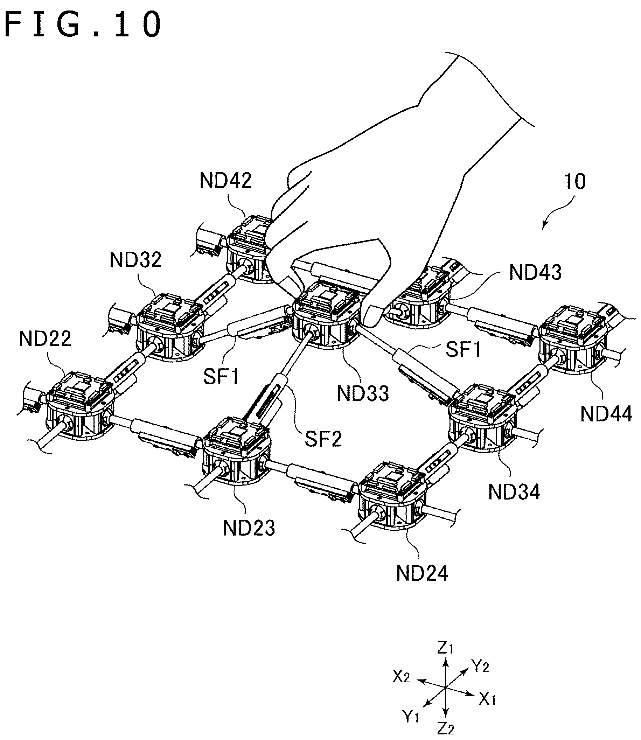

FIG. 10 is a view illustrating a pinching and picking action performed on a node mechanism by a user.
[FIG. 11A]

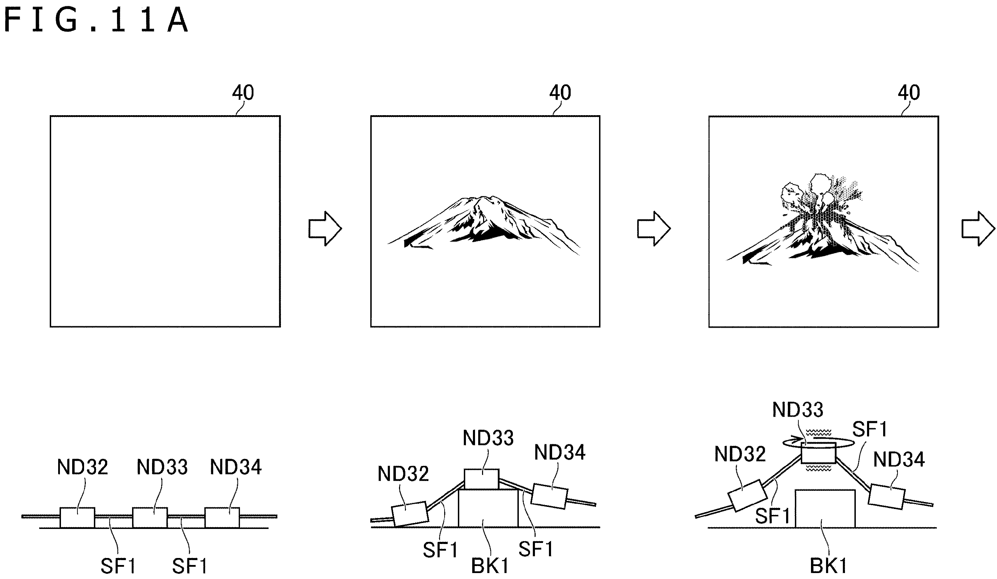

FIG. 11A is a view that assists in explaining a specific example of a rendering under vibration control according to the present embodiment.
[FIG. 11B]

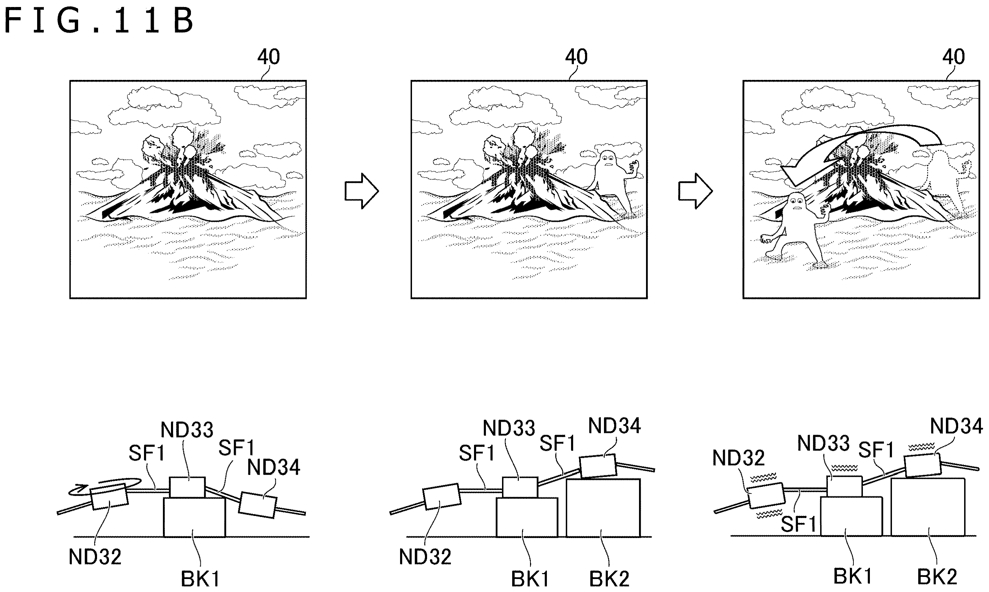

FIG. 11B is a view that assists in explaining a specific example of a rendering under vibration control according to the present embodiment.

[Description of Embodiment]

An embodiment of the present invention (hereinafter referred to as the "present embodiment") will be described hereinbelow with reference to the drawings. In the description that follows, directions indicated by arrows X1 and X2 in FIG. 2 and others represent rightward and leftward directions, respectively, directions indicated by arrows Y1 and Y2 in FIG. 2 and others represent forward and rearward directions, respectively, and directions indicated by arrows Z1 and Z2 in FIG. 2 and others represent upward and downward directions, respectively.

[Outline of display control system]

First, an outline of a display control system 100 according to the present embodiment will be described below with reference to FIGS. 1 through 3. FIG. 1 is a diagram illustrating an example of a physical configuration of the display control system according to the present embodiment. FIG. 2 is a perspective view illustrating a manipulating device according to the present embodiment. FIG. 3 is a functional block diagram illustrating an example of functions performed by an information processing apparatus according to the present embodiment.
The display control system 100 includes the manipulating device, denoted by 10, the information processing apparatus (computer), denoted by 20, and a display device 40.
As illustrated in FIG. 2, the manipulating device 10 refers to a grid-shaped device having a plurality of node mechanisms ND and a plurality of link shafts SF. The manipulating device 10 outputs signals to the information processing apparatus 20, depending on its posture changes caused by manipulations made by a user. Note that the manipulating device 10 is preferably of such a size that opposite ends thereof can be gripped by the user with his/her both hands.
As illustrated in FIG. 1, the manipulating device 10 has three-dimensional magnetic sensors 50, inertial measurement units (IMUs) 60, and position sensors 70. In the display control system 100, these various sensors acquire positional coordinates of the respective node mechanisms ND, allowing the overall shape of the manipulating device 10 to be recognized. Note that details of the configurations and functions of the various sensors and the entire configuration of the manipulating device 10 will be described later. Note that, as described later, one node mechanism ND includes four three-dimensional magnetic sensors 50. However, in order to avoid the complexity of illustration in FIG. 1, only one three-dimensional magnetic sensor 50 is illustrated in association with one node mechanism ND.
The information processing apparatus 20 is, for example, preferably a gaming apparatus having a function to execute game programs, a function to reproduce moving images, and a function to communicate via the Internet. The information processing apparatus 20 includes a processor 21, a storage unit 22, a communication unit 23, and an input/output unit 24.
The processor 21 is a program-controlled device such as a central processing unit (CPU), for example, that operates according to programs installed in the information processing apparatus 20. The processor 21 has a function to execute the programs and generate moving images as the result of the execution of the programs.
The storage unit 22 is a storage device such as a read only memory (ROM) or a random access memory (RAM) or a hard disk drive, for example. The storage unit 22 stores the programs to be run by the processor 21, for example.
The communication unit 23 is a communication interface for wired communication or wireless communication, for example.
The input/output unit 24 is an input/output port such as a High-Definition Multimedia Interface (HDMI (registered trademark)) port or a universal serial bus (USB) port, for example.
The manipulating device 10 is capable of performing wired communication or wireless communication with the communication unit 23 of the information processing apparatus 20.

The display device 40 is preferably a liquid crystal display or the like, for example. Alternatively, the display device 40 may be a head-mounted display that the user can wear on his/her head.

As illustrated in FIG. 3, the information processing apparatus 20 implements an acquiring section 31, a calculating section 32, a display controlling section 33, a vibration controlling section 34, and a vibration target specifying section 35. The acquiring section 31 is implemented mainly by the processor 21 and the communication unit 23. The calculating section 32, the display controlling section 33, the vibration controlling section 34, and the vibration target specifying section 35 are mainly implemented by the processor 21. These functions are fulfilled by the computer as it executes the programs according to the present embodiment. The programs may be stored in a computer-readable information storage medium.

The acquiring section 31 acquires the positional coordinates of a plurality of grid points included in the manipulating device 10. According to the present embodiment, the positional coordinates of the plurality of grid points correspond respectively to the positional coordinates of the plurality of node mechanisms ND. Note that the positional coordinates of the plurality of node mechanisms ND are acquired on the basis of information detected by the various sensors included in the manipulating device 10.

The calculating section 32 calculates the positional coordinates of a plurality of control points associated in advance with the grid points, on the basis of the positional coordinates of the grid points at the plurality of node mechanisms ND. Note that the plurality of control points are preferably associated in advance with respective portions of a display object.

The display controlling section 33 determines respective display modes of a plurality of elements included in the display object, on the basis of the positional coordinates of the plurality of grid points that are associated in advance with the plurality of elements. Further, the display controlling section 33 displays the display object on the display device 40 on the basis of the positional coordinates of the plurality of control points that correspond respectively to the positional coordinates of the plurality of grid points.

Note that the vibration controlling section 34 and the vibration target specifying section 35 will be described later.

[Configuration of manipulating device]

Next, a configuration of the manipulating device 10 according to the present embodiment will be described below basically with reference to FIG. 2. FIG. 2 illustrates the manipulating device 10 as laid in a basic posture. In the present embodiment, the "basic posture" of the manipulating device 10 refers to a posture in which the plurality of node mechanisms ND are all in the same position in the upward and downward directions and are spaced at equal intervals in the forward and rearward directions and the leftward and rightward directions.

The manipulating device 10 has the plurality of node mechanisms ND and the plurality of link shafts SF.

The node mechanisms ND hold the ends of the link shafts SF while making the link shafts SF variable in posture. Each node mechanism ND holds ends of at least two or more link shafts SF. Further, opposite ends of all the link shafts SF are held by respective ones of the node mechanisms ND. Such a configuration makes the manipulating device 10 shaped as a grid in its entirety.

FIG. 2 illustrates an example in which five node mechanisms ND are arrayed in each of the forward and rearward directions and the leftward and rightward directions. In other words, FIG. 2 illustrates an example in which the manipulating device 10 has 25 node mechanisms ND. With such a layout, the manipulating device 10 has an essentially rectangular contour.

Note that, in FIG. 2, the node mechanisms ND and the link shafts SF are illustrated as exposed. However, when the manipulating device 10 is actually used by the user, it may be covered in its entirety with a cover of cloth, for example. In this case, the cover is preferably of a size and a material that can be deformed or expanded and contracted depending on changes in the posture of the manipulating device 10.

In FIG. 2, the node mechanism ND that is located at the front end and left end of the grid-shaped manipulating device 10 is denoted by reference signs "ND11." Further, those node mechanisms ND that are progressively spaced rearwardly or rightwardly from the node mechanism ND11 are denoted by reference signs including progressively incremental numbers. That is, for example, the node mechanism ND that is positioned rearwardly adjacent to the node mechanism ND11 is denoted by "ND21" whereas the node mechanism ND that is positioned rightwardly adjacent to the node mechanism ND11 is denoted by "ND12." However, in the present specification, in a case where a node mechanism does not need to be positionally distinguished from the other node mechanisms, it is simply referred to as the "node mechanism ND."

A link shaft SF has its opposite ends held by respective node mechanisms ND and interconnects adjacent ones of the plurality of node mechanisms ND. Specifically, a link shaft SF interconnects node mechanisms ND that are adjacent to each other in the leftward and rightward directions, and a link shaft SF also interconnects node mechanisms ND that are adjacent to each other in the forward and rearward directions.

As illustrated in FIG. 2, of the plurality of link shafts SF, a shaft that extends in the leftward and rightward directions and interconnects node mechanisms ND that are adjacent to each other in the leftward and rightward directions is denoted by a reference sign "SF1." Moreover, of the plurality of link shafts SF, a shaft that extends in the forward and rearward directions and interconnects node mechanisms ND that are adjacent to each other in the forward and rearward directions is denoted by a reference sign "SF2." However, in the present specification, in a case where a link shaft does not need to be positionally distinguished from the other link shafts, it is simply referred to as the "link shaft SF."

Note that, in FIG. 2, two link shafts SF are held by each of the node mechanisms ND11, ND15, ND51, and ND55 that are disposed at the respective corners of the grid-shaped manipulating device 10. Further, three link shafts SF are held by each of the node mechanisms ND12 through ND14, for example, that are disposed at the ends other than the corners. Moreover, four link shafts SF are held by the node mechanism ND22 and other node mechanisms ND that are disposed at positions other than the corners and ends. In such a manner, although the number of link shafts SF held by each of the node mechanisms ND varies depending on its position in the manipulating device 10, at least two or more link shafts are preferably held by one node mechanism ND.

[Node mechanism]

Next, details of a configuration of the node mechanisms ND will be described below with reference to FIGS. 4 through 6. FIG. 4 is a perspective view illustrating a single node mechanism and four link shafts held by the node mechanism. FIG. 5 is a perspective view illustrating the node mechanism with an outer covering removed therefrom. FIG. 6 is an exploded perspective view illustrating the node mechanism with a link shaft removed therefrom. FIGS. 4 and 5 illustrate a node mechanism ND to which there are attached four link shafts SF extending respectively in the forward, rearward, leftward, and rightward directions. Note that, in FIG. 5, the node mechanism illustrated in FIG. 4 is depicted as inverted in the upward and downward directions with at least a lower plate 12 and attachments 132 removed.

The node mechanism ND has an upper plate 11, a lower plate 12, and holders 13 that are sandwiched between the upper plate 11 and the lower plate 12 and that hold the ends of link shafts SF. The holders 13 are fixed to the upper plate 11 and the lower plate 12.

As illustrated in FIGS. 4 and 5, four holders 13 are included in one node mechanism ND in order to make the node mechanism ND connectable to the node mechanisms ND that are disposed adjacent thereto in the leftward and rightward directions and in the forward and rearward directions through the respective link shafts SF.

According to the present embodiment, as illustrated in FIG. 5, each of the holders 13 has a receptacle 131 that houses therein a spherical member B at the end of a link shaft SF to be described later and that has an inner wall shaped complementarily to the spherical member B. Further, the holder 13 has an opening 131h through which the receptacle 131 is open and that is smaller in diameter than the spherical member B.

Moreover, as illustrated in FIG. 4, one of the holders 13 holds the link shaft SF2 extending forwardly from the node mechanism ND, in a manner to allow the link shaft SF2 to vary angularly through $\pm 45°$ about an X-axis and through $\pm 45°$ about a Z-axis around the holder 13. The link shaft SF2 extending rearwardly from the node mechanism ND, the link shaft SF1 extending leftwardly therefrom, and the link shaft SF1 extending rightwardly therefrom are also held by the holder 13 in a similar manner to vary angularly.

As illustrated in FIG. 6, the holder 13 includes a first member 131a and a second member 131b that form the receptacle 131 and the attachment 132 to which the first member 131a and the second member 131b are attached.

Moreover, as illustrated in FIG. 6, a three-dimensional magnetic sensor 50 is included in each of the holders 13 as first detecting means for detecting a direction in which the link shaft SF extends from the node mechanism ND. Since four holders 13 are included in one node mechanism ND, one node mechanism ND includes four three-dimensional magnetic sensors 50. Note that the direction in which a link shaft SF extends from the node mechanism ND is stated otherwise as the angle through which the link shaft SF is tilted with respect to the node mechanism ND.

Each of the three-dimensional magnetic sensors 50 is preferably provided in facing relation to a magnet M disposed in the spherical member B of a link shaft SF to be described later for detecting a change in the magnetic field generated by the magnet M. Note that, according to the present embodiment, a three-dimensional magnetic sensor 50 capable of detecting magnetic signals in X-axis, Y-axis, and Z-axis directions is described by way of example as the first detecting means. However, the present invention is not limited to such a three-dimensional magnetic sensor. Magnetic sensors capable of detecting respective magnetic signals in the axis directions may instead be provided. Further, the first detecting means is not limited to magnetic sensors, and is only required to be sensors having a function to detect the direction in which the link shaft SF extends from the node mechanism ND.

Here, inasmuch as a plurality of link shafts SF are held by one node mechanism ND, a plurality of magnets M are disposed adjacent to each other. Therefore, those magnets M may magnetically affect each other, possibly making the three-dimensional magnetic sensors 50 unable to appropriately detect changes in the magnetic field. In view of this, according to the present embodiment, each holder 13 includes a magnetism minimizing wall partly therein. Specifically, each of the attachments 132 includes a magnetism minimizing wall including an iron plate that reduces the magnetic effect of magnets M. The magnetism minimizing wall is effective to prevent the three-dimensional magnetic sensor 50 from being magnetically affected by the other magnets M than the magnet disposed in facing relation to the three-dimensional magnetic sensor 50. As a result, the three-dimensional magnetic sensor 50 is able to accurately detect the direction in which the link shaft SF extends from the node mechanism ND that includes the three-dimensional magnetic sensor 50. Note that the magnetism minimizing wall may include a material of high magnetic permeability such as permalloy mainly including iron and nickel, for example.

Further, as illustrated in FIG. 4, an IMU 60 is mounted as second detecting means for detecting the posture of the node mechanism ND on the upper plate 11. The IMU 60 includes a gyrosensor and an acceleration sensor and detects the angular velocity and acceleration of the node mechanism ND. Note that, according to the present embodiment, the IMU is described by way of example as the second detecting means. However, the present invention is not limited to such an IMU. The second detecting means is instead only required to be a sensor having a function to detect the posture of the node mechanism ND.

Note that, although not illustrated, a microprocessor is preferably mounted on the lower plate 12. The microprocessor preferably calculates various items of information including the tilt angles of the link shafts SF and the lengths of the link shafts SF, for example, on the basis of output values from the various sensors. As the microprocessors are mounted in the respective node mechanisms ND in such a manner, real-time sensing can be guaranteed.

[Link shaft]

Next, details of a configuration of the link shafts SF will be described below with reference to FIGS. 4 through 7. FIG. 7 is a cross-sectional view illustrating a manner in which a magnet disposed in facing relation to a three-dimensional magnetic sensor is displaced.

Each of the link shafts SF has an elongate portion E extending in the leftward and rightward directions or the forward and rearward directions and the spherical member B at an end of the elongate portion E. According to the present embodiment, the elongate portion E is configured to be extendible and contractible. The elongate portion E is preferably made extendible and contractible by two members that are slidable against each other included therein. Elongate portions E that extend in the leftward and rightward directions are extendible and contractible in the leftward and rightward directions, whereas elongate portions E that extend in the forward and rearward directions are extendible and contractible in the forward and rearward directions. Each of the elongate portions E preferably has a maximum length that is approximately 1.4 times its minimum length.

Further, a position sensor 70 as third detecting means for detecting displacement of the elongate portion E is mounted on each elongate portion E. The position sensor is a resistance-type position sensor, for example, and preferably includes a variable resistor that converts a mechanical positional change into an analog electric signal. Displacement of the elongate portion E detected by the position sensor 70 is preferably output to the information processing apparatus 20 as information with respect to the distance between the two node mechanisms ND that hold the respective opposite ends of the link shaft SF that has the elongate portion E.

Moreover, as illustrated in FIG. 7, the magnet M is embedded in the spherical member B. The magnet M is preferably a permanent magnet. The magnet M is preferably provided in facing relation to the three-dimensional magnetic sensor 50 provided in the node mechanism ND. The magnet M has its orientation changed upon a change in the direction in which the link shaft SF extends from the node mechanism ND. When the orientation of the magnet M is changed, the magnetic field detected by the three-dimensional magnetic sensor 50 is changed. The change in the magnetic field detected by the three-dimensional magnetic sensor 50 is preferably output to the information processing apparatus 20 as information with respect to the direction in which the link shaft SF extends from the node mechanism ND.

Note that solid lines in FIG. 7 represent the link shaft SF at the time when the manipulating device 10 is laid in the basic posture, whereas broken lines in FIG. 7 represent the link shaft SF that is tilted with respect to the node mechanism ND. In the solid-line state illustrated in FIG. 7 and the broken-line state illustrated in FIG. 7, the magnet M has different postures with respect to the three-dimensional magnetic sensor 50, and hence, the three-dimensional magnetic sensor 50 detects different magnetic fields.

[Transmission paths]

Next, transmission paths of the display control system 100 according to the present embodiment will be described below with reference to FIG. 8. FIG. 8 is a view schematically illustrating a wiring arrangement of the display control system according to the present embodiment. Note that, in FIG. 8, some of the node mechanisms ND and the link shafts SF are omitted from illustration, though their layouts remain the same as those illustrated in FIG. 2.

As described above, the three-dimensional magnetic sensors 50 and the IMUs 60 are mounted respectively in the plurality of node mechanisms ND. Further, the position sensors 70 are mounted respectively on the plurality of link shafts SF. Signals detected by these sensors are output to the information processing apparatus 20. If signal lines were individually connected to the plurality of node mechanisms ND, the wiring would be complicated.

In view of this, according to the present embodiment, there is employed an arrangement in which five node mechanisms ND arrayed in the forward and rearward directions output signals via a common transmission path to the information processing apparatus 20. Specifically, as illustrated in FIG. 8, a common signal line SL is connected to the five node mechanisms ND arrayed in the forward and rearward directions. In other words, according to the present embodiment, there are employed five signal lines SL arrayed in the leftward and rightward directions.

According to the present embodiment, further, a host node mechanism NDh is provided as an information collector for collecting signals transmitted through the five signal lines SL. The signals from the 25 node mechanisms ND can thus be collected by the single host node mechanism NDh and output via the host node mechanism NDh to the communication unit 23 of the information processing apparatus 20 (see FIG. 1). Note that, although the term "host node mechanism NDh" is used herein for the sake of convenience, the host node mechanism NDh is different in configuration from the node mechanisms ND. Specifically, the host node mechanism NDh does not have various sensors and the like.

Further, it is preferred that electric power lines also be of the same wiring arrangement as that of the signal lines SL illustrated in FIG. 8. In other words, the five node mechanisms ND arrayed in the forward and rearward directions are preferably supplied with electric power via a common electric power line.

Note that, here, the manipulating device 10 has been described by way of example as including the signal lines SL and the electric power lines. However, the present invention is not limited to such details, and the node mechanisms ND may transmit signals to the information processing apparatus 20 by way of wireless communication. According to the alternative, each of the node mechanisms ND preferably incorporates a wireless communication circuit. The wireless communication technology thus used requires no wiring, making it possible to allow the manipulating device 10 to change more flexibly in posture.

[Acquisition of positional coordinates of node mechanisms]

Next, acquisition of positional coordinates of the node mechanisms ND will be described below with reference to FIG. 9. FIG. 9 is a view illustrating positional coordinates of various portions of node mechanisms. Here, the plurality of node mechanisms ND are assigned respective node numbers.
Specifically, as illustrated in FIG. 2, according to the example in which there are 25 node mechanisms ND, each of the node mechanisms ND is assigned either one of 1 through 25. FIG. 9 illustrates a node mechanism ND having a node number n and a node mechanism ND having a node number n+1.

FIG. 9 illustrates a manner in which the link shaft SF interconnecting the node mechanisms DN having the node numbers n and n+1 is tilted and the node mechanism DN having the node number n+1 is tilted in its own posture. Acquisition of positional coordinates of the node mechanism DN having the node number n+1 in this state will be described below.

It is assumed that the central position of the node mechanism ND having the node number n has coordinates $P_n$ $(X_n, Y_n, Z_n)$ and that the central position of the node mechanism ND having the node number n+1 has coordinates $P_{n+1}$ $(X_{n+1}, Y_{n+1}, Z_{n+1})$. Further, according to the present embodiment, the coordinates of the central position of a node mechanism ND represent the positional coordinates of the node mechanism ND.

Moreover, the coordinates of the held positions where the four link shafts SF are held by the node mechanism ND having the node number n are represented by $PJ_m(J_mX_n, J_mY_n, J_mZ_n)$ where m represents shaft numbers 1 through 4. According to the present embodiment, each of the held positions is located at the center of the spherical member B of one of the link shafts SF. As illustrated in FIG. 9, the first held position $PJ_1$ is located across the central position of the node mechanism ND from the third held position PJ3. Moreover, the second held position $PJ_2$ is located across the central position of the node mechanism ND from the fourth held position $PJ_4$.

Similarly, the coordinates of the held positions where the four link shafts SF are held by the node mechanism ND having the node number n+1 are represented by $PJ_m(J_mX_{n+1}, J_mY_{n+1}, J_mZ_{n+1})$ where m represents shaft numbers 1 through 4.

Moreover, the angles of a link shaft SF held by the node mechanism ND having the node number n around a V-axis (yaw axis) and an H-axis (pitch axis) illustrated in FIG. 4 are denoted by $AJ_m(J_mV_n, J_mH_n)$.

Further, the length between the first held position $PJ_1$ and the third held position $PJ_3$ in each node mechanism ND is denoted by W. Moreover, the length of a link shaft SF from the first held position $PJ_1$ where one end of the link shaft SF is held by the node mechanism ND having the node number n to the third held position PJ3 where the other end of the link shaft SF is held by the node mechanism ND having the node number n+1 is denoted by $R_n$. The length W refers to a preset fixed length whereas the length $R_n$ refers to a length variable depending on the length of the link shaft SF that is extendible and contractible.

For example, in a case where the coordinates of the central position of the node mechanism ND having the node number n are represented by (0, 0, 0), the coordinates $(J_1X_n, J_1Y_n, J_1Z_n)$ of the first held position $PJ_1$ in the node mechanism ND are represented by (W/2, 0, 0). Similarly, the coordinates $(J_2X_n, J_2Y_n, J_2Z_n)$ of the second held position PJ2 are represented by (0, -W/2, 0), the coordinates $(J_3X_n, J_3Y_n, J_3Z_n)$ of the third held position $PJ_3$ are represented by (-W/2, 0, 0), and the coordinates $(J_4X_n, J_4Y_n, J_4Z_n)$ of the fourth held position $PJ_4$ are represented by (0, W/2, 0).

Moreover, the coordinates $(J_3X_{n+1}, J_3Y_{n+1}, J_3Z_{n+1})$ of the third held position $PJ_3$ in the node mechanism ND having the node number n+1 are represented by way of polar coordinate transformation on the basis of the first held position $PJ_1$ in the node mechanism ND having the node number n and the angles $AJ_1$ about the V-axis and the H-axis of the link shaft SF held at the first held position $PJ_1$, as follows:

$$\mathtt{J_3X_{n+1}\ =\ J_1X_n+R_n*sin(90°-J_1V_n)*cos(J_1H_n)}$$

$$\mathtt{J_3Y_{n+1}\ =\ J_1Y_n+R_n*sin(90°-J_1V_n)*sin(J_1H_n)}$$

$$\mathtt{J_3Z_{n+1}\ =\ J_1Z_n+R_n*cos(90°-J_1V_n)}$$

Further, the tilt of the posture of the node mechanism ND having the node number n+1, i.e., the angles about the V-axis and the H-axis, is represented by $(V_{n+1}, H_{n+1})$. In this case, the coordinates $P(X_{n+1} Y_{n+1}, Z_{n+1})$ of the central position of the node mechanism ND having the node number n+1 are represented on the basis of the coordinates $(J_3X_{n+1}, J_3Y_{n+1}, J_3Z_{n+1})$ of the third held position $PJ_3$ in the node mechanism ND having the node number n+1, as follows:

$$\mathtt{X_{n+1}\ =\ J_3X_{n+1}+W/2*sin(90°-V_{n+1})*cos(H_{n+1})}$$

$$\mathtt{Y_{n+1}\ =\ J_3Y_{n+1}+W/2*sin(90°-V_{n+1})*sin(H_{n+1})}$$

$$\mathtt{Z_{n+1}\ =\ J_3X_{n+1}+W/2*cos(90°-V_{n+1})}$$

As described above, the positional coordinates of the node mechanism ND having the node number n+1 can be calculated on the basis of the tilt of the posture of the node mechanism ND having the node number n+1, the tilt angle of the link shaft SF with respect to the node mechanism ND having the node number n, and the length of the link shaft SF in addition to the positional coordinates of the node mechanism ND having the node number n. The positional coordinates of all the node mechanisms ND can be acquired by performing such calculations depending on the number of the node mechanisms ND. Note that the tilt angle of the link shaft SF is detected on the basis of the output value from the three-dimensional magnetic sensor 50, the length of the link shaft SF is detected on the basis of the output value from the position sensor 70, and the tilt of the posture of the node mechanism ND is detected on the basis of the output value from the IMU 60.

Note that calculating the positional coordinates of all the node mechanisms ND in a similar manner is not indispensable. Estimated values that are estimated from the positional coordinates of peripheral node mechanisms ND, for example, may be used for such calculations.

[Configuration for vibrating node mechanisms ND]

Next, a configuration for vibrating node mechanisms ND according to the present embodiment will be described below.

The manipulating device 10 has a vibrating structure for vibrating the manipulating device 10. The vibrating structure preferably has a plurality of vibrators 80 associated respectively with the plurality of node mechanisms ND. FIGS. 4 and 9 illustrate an example in which the vibrator 80 is provided on an upper portion of each of the node mechanisms ND. Note that, in FIG. 2 and FIG. 10 to be described later, the vibrators 80 are omitted from illustration. However, the vibrators 80 are preferably provided on all of the plurality of node mechanisms ND. The vibrators 80 are preferably voice-coil motors (VCMs), for example.

Though the FIGS. 4 and 9 illustrate the example in which the vibrator 80 is provided on the upper portion of each of the node mechanisms ND, the present invention is not limited to the illustrated layout of the vibrator 80. For example, the vibrator 80 may be disposed on a lower portion of the node mechanism ND or may be housed within the node mechanism ND.

Note that, according to the present embodiment, the example in which the vibrator 80 is provided in each of the node mechanisms ND is described. However, the present invention is not limited to such details, and it is sufficient if the vibrators 80 are provided in a manner to vibrate the manipulating device 80. For example, the vibrators 80 may be attached to the link shafts SF and may vibrate the link shafts SF to indirectly vibrate the node mechanisms ND. In other words, it is sufficient if the vibrators 80 are provided in a manner to express force-like tactile senses by vibrating the manipulating device 10 at least partly or entirely. Moreover, the vibrators 80 may not need to be provided in all the node mechanisms ND, and may not be provided in those node mechanisms ND that have a small number of opportunities for contact with the user.

Further, as illustrated in FIG. 3, the information processing apparatus 20 implements the vibration controlling section 34 and the vibration target specifying section 35 in addition to the acquiring section 31, the calculating section 32, and the display controlling section 33 described above. The vibration controlling section 34 controls vibrations of the plurality of vibrators 80 provided respectively in the plurality of node mechanisms ND. The vibration target specifying section 35 specifies those node mechanisms ND that represent vibration targets, i.e., those to be vibrated, among the plurality of node mechanisms ND.

[Vibration control]

Next, examples of vibration control according to the present embodiment will be described below. As described below, the present embodiment employs a configuration that vibrates at least part of the manipulating device 10, depending on the state of at least either one of the plurality of node mechanisms ND. Here, the state of a node mechanism ND refers to a state depending on an external or internal factor such as its positional coordinates, its posture, or whether it is contacted by the user or not.

[First example of vibration control]

The vibration controlling section 34 preferably controls the vibrators 80, depending on the positional coordinates of the node mechanisms ND. Specifically, the vibration controlling section 34 first acquires positional coordinates of the respective node mechanisms ND through the acquiring section 31. Then, the vibration controlling section 34 preferably drives the vibrators 80 provided in those node mechanisms ND whose amount of displacement from a reference position is equal to or larger than a predetermined quantity. Here, the reference position refers to the position of each node mechanism ND where the manipulating device 10 is in the basic posture.

Further, the vibration controlling section 34 may change the magnitude of vibrations, depending on the amount of displacement of the node mechanisms ND from the reference position. For example, the vibration controlling section 34 preferably drives the vibrators 80 to vibrate the node mechanisms ND to a larger extent as the amount of displacement from the reference position is larger.

Note that the amount of displacement may refer to an amount of displacement in either one of X-axis, Y-axis, and Z-axis directions. Further, the amount of displacement is not limited to an amount of displacement from the reference position, and may be an amount of displacement from a predetermined position of each node mechanism ND. Moreover, the amount of displacement of each node mechanism ND may represent a relative displacement with respect to another node mechanism ND.

Further, the vibration controlling section 34 may drive the vibrators 80 to vibrate those node mechanisms ND that are in a position deviating from the reference position in the X-axis or Y-axis direction, for example. In other words, the vibration controlling section 34 may drive the vibrators 80 to vibrate the node mechanisms ND, depending on the difference between the present positional coordinates and predetermined positional coordinates. Moreover, the vibration controlling section 34 preferably stops driving the vibrators 80 at the time when the node mechanisms ND are in the reference position, thereby prompting the user to return each of the node mechanisms ND to the reference position. Note that the present invention is not limited to deviations from the reference position, and the vibration controlling section 34 may drive the vibrators 80 to vibrate those node mechanisms ND that are in a position deviating from a predetermined position other than the reference position.

Further, in a case where the positional coordinates of a particular node mechanism ND are largely displaced or a number of node mechanisms ND are displaced all together, the vibration controlling section 34 may produce large vibrations by simultaneously vibrating a number of vibrators 80, for example. This makes it possible for the user manipulating the manipulating device 10 to feel a large impact. Such vibrations, when occurring concurrent with an event such as an explosion displayed on the display device 40, are effective to cause the user to experience a feeling of presence.

[Second example of vibration control]

The vibration controlling section 34 may control the vibrators 80, depending on the tilt angles of the link shafts SF held by the node mechanisms ND. Specifically, the vibration controlling section 34 first acquires tilt angles of the link shafts SF with respect to the node mechanisms ND through the acquiring section 31. Then, the vibration controlling section 34 preferably drives the vibrators 80 provided in those node mechanisms ND that hold the link shafts SF, in a case where the tilt angles of the link shafts SF are equal to or larger than a predetermined angle.

Moreover, the vibration controlling section 34 may change the magnitude of vibrations, depending on the tilt angle of link shafts SF. For example, the vibration controlling section 34 preferably drives the vibrators 80 to vibrate the node mechanisms ND holding the link shafts SF to a larger extent as the tilt angle of the link shafts SF is larger. With this arrangement, in a case where the user performs a pinching and picking action, for example, the node mechanism ND that has been pinched and picked is vibrated to the largest extent.

In this instance, those peripheral node mechanisms ND disposed around the pinched and picked node mechanism ND are also moved upwardly. In other words, the link shafts SF held by the peripheral node mechanisms ND are also tilted. The tilt of the link shafts SF held by the peripheral node mechanisms ND represents a smaller tilt angle than that of the link shafts SF held by the pinched and picked node mechanism ND. Therefore, the peripheral node mechanisms ND are vibrated to a smaller extent than that of the pinched and picked node mechanism ND.

Note that, according to the present embodiment, the pinching and picking action refers to an action that the user performs to pinch and lift a certain node mechanism ND upwardly, as illustrated in FIG. 10. For example, when the user pinches and picks a node mechanism ND33, the four link shafts SF held by the node mechanism ND33 are tilted due to the weight of the four node mechanisms ND that are positioned adjacent to the node mechanism ND33 forwardly, rearwardly, leftwardly, and rightwardly. Further, the four link shafts SF held by the pinched and picked node mechanism ND33 have their length elongated due to the weight of the four node mechanisms ND that are positioned adjacent to the node mechanism ND33 forwardly, rearwardly, leftwardly, and rightwardly. Moreover, in a case where the node mechanism ND33 is further lifted upwardly from the state illustrated in FIG. 10, the peripheral node mechanisms ND (e.g., ND22, ND23) disposed therearound are also moved upwardly. At this time, of the four link shafts SF held by the peripheral node mechanisms ND (e.g., ND22, ND23), the three link shafts SF held by those node mechanisms ND other than the node mechanism ND33 are also tilted.

[Third example of vibration control]

The vibration controlling section 34 preferably controls the vibrators 80, depending on the speeds of the node mechanisms ND. Specifically, the vibration controlling section 34 first acquires the speed of a node mechanism ND through the acquiring section 31 on the basis of the amount of displacement of the node mechanism ND and time taken until the amount of displacement is reached. In other words, the acquiring section 31 acquires the speed of the node mechanism ND on the basis of the positional coordinates of the node mechanism ND obtained before it is displaced and the positional coordinates of the node mechanism ND obtained after it is displaced and time taken until the node mechanism ND is moved from its pre-displacement state to its post-displacement state. Then, in a case where the speed of the node mechanism ND is equal to or larger than a predetermined value, the vibration controlling section 34 preferably drives the vibrator 80 provided in the node mechanism ND. Note that the manipulating device 10 may include separate sensors for detecting the speeds of the node mechanisms ND.

Moreover, the vibration controlling section 34 preferably changes the magnitude of vibrations, depending on the magnitudes of the speeds of the node mechanisms ND. For example, the vibration controlling section 34 may drive the vibrators 80 to vibrate the node mechanisms ND to a larger extend as the speeds are higher.

Moreover, the vibration controlling section 34 may increase the vibrations as the speeds of the node mechanisms ND become higher and may reduce the vibrations or stop the vibrations in a case where the node mechanisms ND have reached a certain speed. Such vibration control can give the user a feeling as if dynamic friction were in action.

Further, the vibration controlling section 34 may control the vibrators 80, depending on the accelerations of the node mechanisms ND. First, the vibration controlling section 34 preferably acquires the accelerations of the node mechanisms ND through the acquiring section 31 on the basis of the outputs from the IMUs 60 provided in the node mechanisms ND. Then, in a case where the accelerations of the node mechanisms ND are equal to or larger than a predetermined value, the vibration controlling section 34 preferably drives the vibrators 80 provided in the node mechanisms ND.

Further, for example, after having pinched and picked a node mechanism ND, the user preferably twists the node mechanism ND clockwise or counterclockwise as viewed from above. It is preferred that the vibration controlling section 34 instantaneously vibrate the twisted node mechanism ND on the basis of the acceleration of the node mechanism ND at the time. Such vibration control can give the user a feeling as if the user were manipulating a dial.

Further, rather than twisting a pinched and picked node mechanism ND, the user may take action like swinging the node mechanism ND lightly while the node mechanism ND is being pinched and picked, and the vibration controlling section 34 may instantaneously vibrate the node mechanism ND concurrent with the user's action. Such vibration control allows the user to have a feeling of click.

[Fourth example of vibration control]

The vibration controlling section 34 preferably controls the vibrators 80 to vibrate a node mechanism ND that has been specified by the vibration target specifying section 35. The vibration target specifying section 35 preferably specifies a node mechanism ND as a vibration target to be vibrated, on the basis of the positional coordinates of the node mechanism ND and the speed of the node mechanism ND, for example. Alternatively, the manipulating device 10 may have a sensor for sensing that the user has pinched or touched a node mechanism ND or a sensor for sensing that the user's hand is approaching a node mechanism ND. In this case, the vibration target specifying section 35 preferably specifies the node mechanism ND as a vibration target on the basis of the sensed result from the sensor. According to the fourth example, those node mechanisms ND other than the node mechanism ND specified by the vibration target specifying section 35 may not be vibrated. In other words, even in a case where those node mechanisms ND other than the node mechanism ND that has been pinched and picked are positionally displaced, only the node mechanism ND that has been pinched and picked may be vibrated.

Note that node mechanisms ND that can be specified by the vibration target specifying section 35 are not limited to node mechanisms ND whose positional coordinates have changed largely and node mechanisms ND whose speeds are high, and may include node mechanisms ND around those node mechanisms ND. That is, for example, the vibration target specifying section 35 may specify not a node mechanism ND that has been pinched and picked, but a node mechanism ND next to the node mechanism ND that has been pinched and picked, as a vibration target to be vibrated. By thus vibrating those node mechanisms ND other than the node mechanism ND that the user is touching, it is possible to give the user a feeling of being pulled in a direction opposite a direction in which the node mechanism ND has been pinched and picked. For example, by vibrating a plurality of node mechanisms ND disposed on the right side of the node mechanism ND that has been pinched and picked, it is possible to give the user a feeling of being pulled to the right.

Moreover, the vibration controlling section 34 may perform a mode of control to propagate vibrations from a node mechanism ND that has been pinched and picked, progressively to adjoining node mechanisms ND. In other words, the vibration controlling section 34 may successively vibrate at different times a node mechanism group specified by the vibration target specifying section 35. Specifically, for example, it is preferred that a node mechanism ND33 that has been pinched and picked be vibrated, then a node mechanism ND34 be vibrated 0.1 seconds later, and thereafter, a node mechanism ND35 be vibrated 0.1 seconds later. Such vibration control can give the user a propagation of vibration waves toward a peripheral area as a force-like tactile sense.

According to the fourth example, since the vibration target specifying section 35 can specify any node mechanism ND as a vibration target to be vibrated, vibrations can be generated even in a case where the positional coordinates of the node mechanism ND are not displaced from the reference position. According to the fourth example, moreover, node mechanisms ND that are in positions where the user is unable to perceive them even when they are vibrated can be prevented from being unnecessarily vibrated.

[Fifth example of vibration control]

The vibration controlling section 34 preferably controls the vibrators 80, depending on the display control performed by the display controlling section 33. For example, in a case where the display controlling section 33 displays a character in motion on the display device 40, the vibration controlling section 34 preferably drives the vibrators 80, depending on the motion of the character. For example, in a case where the character moving from the center to the right of the screen is displayed, it is preferred that the vibration controlling section 34 vibrate the vibrator 80 provided in the node mechanism ND disposed at the center of the manipulating device 10 and thereafter vibrate the vibrator 80 provided in the node mechanism ND disposed in a position on the right side of the center of the manipulating device 10, progressively concurrent with the motion of the character. Note that, in a case where the display controlling section 33 displays wind or a wave, for example, rather than a character in motion, on the on the display device 40, the vibration controlling section 34 preferably drives the vibrators 80 in coaction with the motion of the wind or the wave.

[Specific examples of renderings under vibration control]

Next, specific examples of renderings under the above-described examples of vibration control will be described below with reference to FIGS. 11A and 11B. FIGS. 11A and 11B are views that assist in explaining specific examples under the examples of vibration control according to the present embodiment. FIGS. 11A and 11B illustrate image transitions on the display screen of the display device 40 and the states of node mechanisms ND that correspond to the image transitions on the display screen.

As illustrated at the center of FIG. 11A, the manipulating device 10 is placed on a block BK1 that is smaller than the manipulating device 10 but larger than each of the node mechanisms ND, so that some of the node mechanisms ND are raised. In FIG. 11A, the node mechanism ND33 is placed on the block BK1.

The acquiring section 31 acquires the positional coordinates of the node mechanisms ND while the manipulating device 10 is being placed on the block BK1. The display controlling section 33 performs display control based on the acquired positional coordinates. FIG. 11A illustrates at its center an example in which the display controlling section 33 displays a mountain range at the center of the display screen of the display device 40 in response to the displacement of the positional coordinates of the node mechanism ND33 upwardly from the reference position.

Further, the user pinches the raised node mechanism ND33 and changes its orientation. In FIG. 11A, the node mechanism ND33 is illustrated as being twisted clockwise as viewed from above. At this time, the vibration controlling section 34 preferably controls the vibrator 80 to instantaneously vibrate the node mechanism ND33, thus allowing the user to have a feeling of click. FIG. 11A also illustrates an example in which the display controlling section 33 displays the mountain range as it changes to a volcano in response to the action to twist the node mechanism ND33. When the volcano is displayed as erupting, the vibration controlling section 34 preferably controls the vibrators 80 to vibrate the node mechanism ND33. Moreover, the vibration controlling section 34 may control the vibrators 80 to vibrate those node mechanisms around the node mechanism ND33 progressively at different times. The user can thus experience the eruption of the volcano and flows of lava via force-like tactile senses.

Further, FIG. 11B illustrates a manner in which the user has twisted the node mechanism ND32 positioned in the periphery of the node mechanism ND33, clockwise as viewed from above. FIG. 11B also illustrates an example in which the display controlling section 33 displays sea and sky as the background behind the volcano in response to the action to twist the node mechanism ND32. It is preferred that the display controlling section 33 thereafter dynamically display waves produced on the sea. Further, it is preferred that the vibration controlling section 34 progressively vibrate a plurality of node mechanisms ND in coaction with a flow of the waves displayed on the display device 40.

Moreover, FIG. 11B illustrates at its center a block BK2 larger than the block BK1, the block BK2 being additionally disposed beneath the manipulating device 10, so that others of the node mechanisms ND are raised. In FIG. 11B, the node mechanism ND34 is placed on the block BK2.

The acquiring section 31 acquires the positional coordinates of the node mechanisms ND while the manipulating device 10 is being placed on the block BK2. The display controlling section 33 performs display control based on the acquired positional coordinates. FIG. 11B illustrates an example in which the display controlling section 33 displays a character shaped as a giant in a position on the right side of the center of the display screen of the display device 40 in coaction of the displacement of the positional coordinates of the node mechanism ND34 upwardly from the reference position. It is preferred that the user be able to control the motion of the giant by manipulating the manipulating device 10. FIG. 11B illustrates a manner in which the giant moves leftwardly to the front of the display screen in response to the user's manipulation of the manipulating device 10. At this time, the vibration controlling section 34 preferably controls the vibrators 80 to vibrate a number of node mechanisms ND at the same time in response to the motion of the giant. The user can thus experience a large impact due to the motion of the giant.

[Conclusions]

As described above, the manipulating device 10 according to the present embodiment is capable of making complex shape changes by way of extension, contraction, and bending. Therefore, the manipulating device 10 has a high degree of freedom for user's manipulation. Moreover, with vibratory expressions further added, the manipulating device 10 with a high degree of freedom for user's manipulation is able to express force-like tactile senses. As a result, it is possible for the user to experience a feeling of presence.

[Others]

According to the present embodiment, there has been described an example in which n = 5 and m = 5 where n represents the number of arrays of node mechanisms ND in the forward and rearward directions and m represents the number of arrays of node mechanisms ND in the leftward and rightward directions. However, n and m are not limited to such numbers, and it is preferred that n and m be each an integer of at least 3 or more. Moreover, n and m may represent different numbers.

Further, the number of node mechanisms ND included in the manipulating device 10 may be variable. For example, of the node mechanisms ND illustrated in FIG. 2, the node mechanisms ND including the holders 13 that do not hold link shafts SF may hold link shafts SF, thereby making it possible to change n and m to 6 or more. To this end, the node mechanisms ND preferably share a common configuration regardless of the number of the node mechanisms ND that hold link shafts SF. Moreover, the common configuration of the node mechanisms ND is effective to reduce the manufacturing cost thereof. The link shafts SF also preferably share a common configuration regardless of their layout and orientation.

Further, the manipulating device 10 in an example according to the present embodiment includes a quadrangular grid shape including four node mechanisms ND adjacent to each other and four link shafts SF interconnecting them. The present invention is not limited to such details, and it is sufficient if a manipulating device includes a polygonal grid shape. For example, node mechanisms ND and link shafts SF may be arranged to provide a triangular grid shape or a pentagonal grid shape, for example.

Further, each rink shaft SF may be rotatable around a roll axis (indicated by a dot-and-dash line in FIG. 4) with the V-axis as a yaw axis and the H-axis as a pitch shaft as illustrated in FIG. 4. In other words, the node mechanisms ND may hold the link shafts SF such that the link shafts SF are rotatable about axes along the directions in which the link shafts SF extend. With such an arrangement, the manipulating device 10 can have a higher degree of freedom for posture.

According to the present embodiment, there has been described an example in which the manipulating device 10 includes various sensors for acquiring the positional coordinates of the node mechanisms ND. However, the present invention is not limited to such details. The positional coordinates of the node mechanisms ND may be acquired with use of a camera or the like that captures an image of the manipulating device 10 from outside thereof. In this case, it is preferred that the camera be able to acquire three-dimensional positional data.

As described above, the manipulating device 10 may have its shape varied by the weight of the node mechanisms ND. Specifically, for example, one of the node mechanism ND11 and the node mechanism ND12 illustrated in FIG. 2 preferably holds a link shaft SF1 such that the direction in which the link shaft SF1 held thereby extends is varied by the weight of the other of the node mechanism ND11 and the node mechanism ND12. Therefore, when the manipulating device 10 is placed on a surface having surface irregularities, for example, the manipulating device 10 preferably has its shape varied along the surface irregularities.

Moreover, the manipulating device 10 preferably does not have biasing means or the like for returning its shape to the original shape thereof. In other words, it is preferred that the manipulating device 10 be able to maintain its shape except in a case where the user manipulates the manipulating device 10 to change its shape.

For example, the manipulating device can also be configured as follows.

(1) A manipulating device for outputting signals to a computer, depending on its posture changes caused by manipulations made by a user, the manipulating device including:

a plurality of link shafts;
a plurality of node mechanisms that cooperate with the plurality of link shafts in providing a grid shape, the plurality of node mechanisms holding ends of at least two or more of the link shafts of the plurality of link shafts such that the at least two or more of the link shafts are variable in posture; and
a vibrating structure for vibrating the manipulating device, depending on a state of at least either one of the plurality of node mechanisms.

(2) The manipulating device according to (1),

in which the vibrating structure includes a plurality of vibrators provided in association with the plurality of node mechanisms, respectively, and
the vibrators vibrate the node mechanisms, depending on states of the node mechanisms corresponding thereto.

(3) The manipulating device according to (2), including:

acquiring means for acquiring positional coordinates of the node mechanisms,
in which the vibrators vibrate the node mechanisms on the basis of the positional coordinates of the node mechanisms corresponding thereto.

(4) The manipulating device according to (3),
in which the acquiring means acquires speeds of the node mechanisms on the basis of the positional coordinates of the node mechanisms obtained before the node mechanisms are displaced, the positional coordinates of the node mechanisms obtained after the node mechanisms are displaced, and time taken until the node mechanisms are moved from their pre-displacement states to their post-displacement states, and the vibrators vibrate the node mechanisms, depending on the speeds of the node mechanisms corresponding thereto.
(5) The manipulating device according to (3) or (4),
in which the vibrators vibrate the node mechanisms, depending on differences between present positional coordinates acquired by the acquiring means and predetermined positional coordinates.
(6) The manipulating device according to any one of (3) through (5), including:

detecting means for detecting directions in which the link shafts extend,
in which the acquiring means acquires the positional coordinates of the node mechanisms that hold the link shafts, on the basis of the directions in which the link shafts extend.

(7) The manipulating device according to any one of (2) through (6), including:

acquiring means for acquiring accelerations of the node mechanisms,
in which the vibrators vibrate the node mechanisms, depending on the accelerations of the node mechanisms corresponding thereto.

(8) The manipulating device according to any one of (1) through (7), including:

vibration target specifying means for specifying, among the plurality of node mechanisms, a node mechanism as a vibration target to be vibrated,
in which the vibrating structure vibrates the node mechanism specified by the vibration target specifying means.

(9) The manipulating device according to (8),

in which the vibration target specifying means specifies, among the plurality of node mechanisms, a node mechanism group as a vibration target to be vibrated, and
the vibrating structure successively vibrates the node mechanism group specified by the vibration target specifying means.

**Claims**

1. A manipulating device for outputting signals to a computer, depending on its posture changes caused by manipulations made by a user, the manipulating device comprising:

a plurality of link shafts;
a plurality of node mechanisms that cooperate with the plurality of link shafts in providing a grid shape, the plurality of node mechanisms holding ends of at least two or more of the link shafts of the plurality of link shafts such that the at least two or more of the link shafts are variable in posture; and
a vibrating structure for vibrating the manipulating device, depending on a state of at least either one of the plurality of node mechanisms.

2. The manipulating device according to claim 1,

wherein the vibrating structure includes a plurality of vibrators provided in association with the plurality of node mechanisms, respectively, and
the vibrators vibrate the node mechanisms, depending on states of the node mechanisms corresponding thereto.

3. The manipulating device according to claim 2, comprising:

acquiring means for acquiring positional coordinates of the node mechanisms,
wherein the vibrators vibrate the node mechanisms on a basis of the positional coordinates of the node mechanisms corresponding thereto.

4. The manipulating device according to claim 3,

wherein the acquiring means acquires speeds of the node mechanisms on a basis of the positional coordinates of the node mechanisms obtained before the node mechanisms are displaced, the positional coordinates of the node mechanisms obtained after the node mechanisms are displaced, and time taken until the node mechanisms are moved from their pre-displacement states to their post-displacement states, and
the vibrators vibrate the node mechanisms, depending on the speeds of the node mechanisms corresponding thereto.

5. The manipulating device according to claim 3,
wherein the vibrators vibrate the node mechanisms, depending on differences between present positional coordinates acquired by the acquiring means and predetermined positional coordinates.

6. The manipulating device according to claim 3, comprising:

detecting means for detecting directions in which the link shafts extend,
wherein the acquiring means acquires the positional coordinates of the node mechanisms that hold the link shafts, on a basis of the directions in which the link shafts extend.

7. The manipulating device according to claim 2, comprising:

acquiring means for acquiring accelerations of the node mechanisms,
wherein the vibrators vibrate the node mechanisms, depending on the accelerations of the node mechanisms corresponding thereto.

8. The manipulating device according to claim 1, comprising:

   vibration target specifying means for specifying, among the plurality of node mechanisms, a node mechanism as a vibration target to be vibrated,
   wherein the vibrating structure vibrates the node mechanism specified by the vibration target specifying means.

9. The manipulating device according to claim 8,

   wherein the vibration target specifying means specifies, among the plurality of node mechanisms, a node mechanism group as a vibration target to be vibrated, and
   the vibrating structure successively vibrates the node mechanism group specified by the vibration target specifying means.

# F I G . 1

100

20

**INFORMATION PROCESSING APPARATUS**

PROCESSOR ~21

STORAGE UNIT ~22

COMMUNICATION UNIT ~23

INPUT/OUTPUT UNIT ~24

40

DISPLAY DEVICE

10

**MANIPULATING DEVICE**

ND

**NODE MECHANISM**

THREE-DIMENSIONAL MAGNETIC SENSOR ~50

IMU

60

HOST NODE MECHANISM ~NDh

LINK SHAFT

POSITION SENSOR

SF          70

FIG. 2

F I G . 3

20

INFORMATION
PROCESSING APPARATUS

| ACQUIRING SECTION | 31 |

| CALCULATING SECTION | 32 |

| DISPLAY CONTROLLING SECTION | 33 |

| VIBRATION CONTROLLING SECTION | 34 |

| VIBRATION TARGET SPECIFYING SECTION | 35 |

# FIG. 4

# FIG.5

EP 4 586 052 A1

# FIG.6

FIG.7

EP 4 586 052 A1

FIG.8

EP 4 586 052 A1

# FIG.9

$PJ_3$ $(J_3 X_{n+1}, J_3 Y_{n+1}, J_3 Z_{n+1})$
$AJ_3$ $(J_3 V_{n+1}, J_3 H_{n+1})$

$PJ_4$ $(J_4 X_n, J_4 Y_n, J_4 Z_n)$

ND

80

SF

Rn

80

70

ND

P $(X_{n+1}, Y_{n+1}, Z_{n+1})$

$PJ_1$ $(J_1 X_n, J_1 Y_n, J_1 Z_n)$
$AJ_1$ $(J_1 V_n, J_1 H_n)$

P $(X_n, Y_n, Z_n)$

$PJ_3$ $(J_3 X_n, J_3 Y_n, J_3 Z_n)$

$PJ_2$ $(J_2 X_n, J_2 Y_n, J_2 Z_n)$

# FIG.10

# FIG.11A

EP 4 586 052 A1

EP 4 586 052 A1

## INTERNATIONAL SEARCH REPORT

| International application No. |
|---|
| **PCT/JP2022/033877** |

| A. | CLASSIFICATION OF SUBJECT MATTER |
|---|---|

*G06F 3/01*(2006.01)i
FI:    G06F3/01 510; G06F3/01 560

According to International Patent Classification (IPC) or to both national classification and IPC

| B. | FIELDS SEARCHED |
|---|---|

Minimum documentation searched (classification system followed by classification symbols)

G06F3/01

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2005-190465 A (NATIONAL INSTITUTE OF ADVANCED INDUSTRIAL SCIENCE AND TECHNOLOGY) 14 July 2005 (2005-07-14) <br> entire text, all drawings | 1-9 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 October 2022** | **08 November 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/033877**

| Patent document cited in search report | | | Publication date (day/month/year) | Patent family member(s) | | | Publication date (day/month/year) |
|---|---|---|---|---|---|---|---|
| JP | 2005-190465 | A | 14 July 2005 | US | 2007/0091063 | A1 | |
| | | | | GB | 2423846 | A | |
| | | | | WO | 2005/050427 | A1 | |
| | | | | CA | 2547961 | A1 | |
| | | | | KR | 10-2012-0055722 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014061362 A